# EUROPEAN PATENT SPECIFICATION

(11) **EP 3 039 993 B1**
(45) Date of publication and mention of the grant of the patent: **15.08.2018**
(21) Application number: 14841056.6
(22) Date of filing: 21.08.2014
(51) Int. Cl.: A47C 27/08, A47C 27/18, A47G 9/10, A47C 7/02, A61G 7/057, B29C 44/12, B68G 7/00, B29L 31/00

(54) **CUSHION HAVING EMBEDDED AUTOMATICALLY-INFLATING AIR TUBES AND METHOD FOR MANUFACTURING SAME**
KISSEN MIT EINGEBETTETEN AUTOMATISCH AUFBLASENDEN LUFTSCHLÄUCHEN UND VERFAHREN ZUR HERSTELLUNG DAVON
COUSSIN POURVU DE TUBES À GONFLAGE AUTOMATIQUE PAR AIR INTÉGRÉS ET SON PROCÉDÉ DE FABRICATION

(30) Priority: 27.08.2013 KR 20130101716
(43) Date of publication of application: 06.07.2016
(73) Proprietor: Ham, Eui-Shin, Gyeonggi-do 448-724 (KR); Ham, Woo-sung, Seoul 137-814 (KR)
(72) Inventor: Ham, Eui-Shin, Gyeonggi-do 448-724 (KR); Ham, Woo-sung, Seoul 137-814 (KR)
(74) Representative: Müller Schupfner & Partner Patent- und Rechtsanwaltspartnerschaft mbB
(86) International application number: PCT/KR2014/007755
(87) International publication number: WO 2015/030420

(56) References cited:
- EP-A1- 0 423 078
- GB-A- 2 434 978
- JP-A- H0 928 512
- JP-A- H11 506 349
- JP-A- 2001 112 584
- JP-A- 2001 112 584
- JP-U- H0 286 352
- JP-Y1- S4 741 202
- KR-A- 20040 043 795
- KR-A- 20040 065 811

## Description

The present invention relates to a cushion having embedded automatically-inflating air tubes and a method of manufacturing the same, and more particularly, a cushion having embedded automatically-inflating air tubes that can be used as a cushion for various sheets such as bedclothes including a bed and a pillow, and a method of manufacturing the cushion.

As cushion materials for bedclothes having cushion force and elastic restoring force, generally, latex having cushion and elastic restoring force and springs having elastic support force are used.

Cushion materials for bedclothes using the latex or springs have a problem in that when they are used for a long period of time, the elastic support force due to aging of the springs reduces and the elasticity and restoring force of the latex is decreased by load continuously applied to the latex material.

In order to solve this problem in the related art, a cushion material composed of a plurality of plastic bottles formed by blow molding and having self elasticity to discharge or suck air while deforming or restoring by external force and inner cushions disposed between the plastic bottles has been proposed, in which the plastic bottles are integrally connected by wires with the inner cushions there between.

Accordingly, it is possible to further inject or discharge air into or from the plastic bottles in accordance with the weight of a user, so it is possible to adjust elasticity of the cushion material, and accordingly, a user can achieve an optimal cushion in use by adjusting the amount of air in the plastic bottles.

However, the plastic bottles and the inner cushions are not integrated, so it is impossible to supports parts of a human body with appropriate pressure.

That is, when load is applied to any one of the plastic bottles, the plastic bottle is pressed and the side is inclined to the inner cushion, but the inner cushion ant the plastic button are not integrated at the joint, so the side of the plastic bottle is separated from the contact surface of the inner cushion, and accordingly, distribution of load by the plastic bottles and the inner cushions is considerably decreased.

In consideration of this problem, the applicant(s) has filed "Plastic bottle for air mattress" (Korean Patent No. 10-1032462(2011.04.25)) of which the entire volume can be minimized by compressing the internal spaces of plastic bottles when it is kept or carried, "Air bed that use plastic bottle" that can distribute and support load throughout a bed even if the load is concentrated on a portion while adjusting elasticity of an air mattress, and "Bed for a patient using plastic bottle" (Korean Patent No. 10-0956662(2010.04.29)) in which a bed mattress can be smoothly folded along unit frames.

However, the plastic bottle type chambers or cushions sated in the patents are expanded by air artificially supplied and cannot such air themselves, so there is a need for a large capacity pump to inject air into the plastic bottle type chambers or cushions, so the size and capacity of a pump increases, noise is generated due to operation of the pump, and the manufacturing cost increases.

Further, the plastic bottle type chambers or cushions sated in the patents are assembled as a cushion body for a bed or other uses only when the parts (chambers and cushions etc.) are assembled, so work efficiency in assembling decreases and many processes are required to manufacture the product.

Further, when the plastic bottle type chambers or cushions sated in the patents are manufactured as cushion bodies for a bed or other uses, they cannot carried and transported when they are compressed with the volume reduced, so a large space is required to keep them and the cost for transportation increases, which is disadvantageous in export.

Further, the plastic bottles stated in the patents have separable foams (spacers) and keep air therein, so compressive and restoring ability is low and the volumes of the plastic bottles cannot be reduced, and accordingly, the volume is large for shipping (particularly, shipping for export), so the transportation cost increases.

Korean Patent No. 10-0510004, titled "Mattress" by the applicant(s), proposes a product in which a latex that is an external material of a mattress and an air tube that is an internal material are integrated.

In this mattress, air is injected into the air tube and liquid-state latex is inserted into a mold with the air tube keeping air positioned at the center in the mold, so the latex is molded around the air tube and the molted external material is reinforced.

However, in this type of mattress, cells are independently positioned, so an increase in pressure of the air tube just hardens the tube and has a limit in the function of a cushion. The harder the tube, the more the pressure contact increases, which increases inconvenience.

EP 0 423 078 A1 discloses a seat comprising a cushion for motor vehicles. The backrest, i.e. the cushion, has padding constituted by a rear layer of foam plastic material and a front layer. Inflatable pneumatic elements are glued between the two layers.

GB 2 434 978 A shows a vehicle bench comprising a seat bottom. Air bladders are provided having a rectangular cross-section. The air bladders are arranged directly next to each other and between a pan and a cushion. The present invention has been made in an effort to solve the problem and an object of the present invention is to provide a cushion in which expanding air tubes are arranged with regular intervals to be rectangular parallelepipeds in the cavity of a mold for manufacturing a cushion, a cushion material is injected into the cavity of the mold for foaming such that the cushion material covers the air tubes and is integrally bonded to the outer surfaces of the air tubes, high-elasticity cushion force is provided by integrating the air tubes and the cushion material by ensuring a space having a rectangular cross-section sealed in the cushion after foaming,
load is uniformly distributed, deformation of the external shape of the cushion is prevented, and when external force is removed after the volume is reduced by contracting, the cushion expands itself.

Another object of the present invention is to provide a cushion having an embedded air tube that can be carried in large quantity by minimizing the volume, that can automatically restore when pressure is removed, and that can save the material.

Another object of the present invention is to provide a cushion having an embedded air tube in which when load is applied to a specific air tube from the outside and the tube increases in pressure and deforms, the pressure is transmitted and distributed to adjacent air tubes.

In order to achieve the object of the present invention, a cushion is provided as claimed in claim 1. The air injecting/discharging unit includes: diverging air supply hoses that communicates with the air tubes, respectively; a single main air supply hose that communicates with the ends of the diverging air supply hoses; and a cap that is coupled to the end of the single main air supply hose.

The diverging air supply hoses and the main air supply hose are integrally embedded in the cushion material when the cushion material is foamed, and the cap coupled to the end of the main air supply hose is exposed outside the cushion material.

In order to achieve the object of the present invention, another aspect of the present invention provides a method of manufacturing a cushion as claimed in claim 4. In foaming, diverging air supply hoses communicating with the air tubes and a single main air supply hose communicating with the ends of the diverging air supply hoses are integrally embedded in the cushion material except for the ends. Further, a plurality of pins that support the tops of the air tubes filled with air is vertically arranged in the upper cavity of the upper mold and the pins are high enough to support the tops of the air tubes. Accordingly, the expanding air tubes are supported without coming off by the pins in foaming.

Preferably, a plurality of pins that supports the sides of the air tubes filled with air is vertically arranged in the lower cavity, so the tubes can keep the rectangular cross-sections.

The present invention provides the following effects through the configuration described above.

According to the present invention, there is provided a tube in which a plurality of air tubes expanding in a rectangular cross-section is arranged with regular intervals in a mold such as a bed or a pillow and a cushion material that is a high-elasticity material covers and is integrally bonded to the outer surfaces of the air tubes, deformation is prevented, the air tubes and the cushion material are integrated, and the air tubes are automatically filled with air up to the atmospheric pressure.

In particular, since the air tubes having a rectangular cross-section are arranged with regular intervals integrally in the cushion material, the cushion material between the air tubes is compressed when a load is applied, so the supporting force is increased, and the air tubes convert vertical load into horizontal load, so the load is distributed throughout the air holes with reduction of weight, and accordingly, elastic support force is provided and load can be uniformly distributed.

Further, it is possible to adjust air pressure in the air tubes by injecting/discharging air into/out of the air tubes, so it is possible to achieve cushion force and elastic support force that a user wants.

Further, by compressing the cushion material after completely discharging the air in the air tubes, the entire size is reduced and the cushion material can be easily put into a compact closet or bag.

Further, the air tubes are automatically filled with air up to the atmospheric pressure in the present invention, there is no need to inject a large amount of air, and accordingly a small pump for injecting air is available and the manufacturing cost and noise can be reduced by using a small pump.

Further, it is possible to reduce the volume of the cushion having an embedded air tubes of the present invention by pressing the cushion material for shipping or carrying, and when external force is removed, the cushion is automatically restored by automatic inflow of air, so it is possible to reduce carrying cost and transportation cost for export with reduction in volume for shipping.

Further, since a plurality of air tubes is connected, when pressure is applied to a specific air tube from the outside, the pressure is transmitted and distributed to the other air tubes, the a human body can be comfortably supported.

Since the cushion having embedded automatically-inflating tubes is light, it can be conveniently handled, and the amount of raw material such as latex or foam is reduced, and accordingly, the manufacturing cost is reduced.
FIG. 1 is a perspective view showing the external shape of a cushion having embedded air tubes according to the present invention.
FIG. 2 is a partial cross-sectional perspective view showing the cushion having embedded air tubes according to the present invention.
FIG. 3 is a cross-sectional view showing the cushion having embedded air tubes according to the present invention.
FIG. 4 is a cross-sectional view showing a cushion that is compressed after air is taken out from the air tubes in the cushion according to the present invention.
FIGS. 5a to 5c are views schematically illustrating a method of manufacturing a cushion having embedded air tubes according to the present invention in the size of a pillow.
FIGS. 6a to 6c are views schematically illustrating a method of manufacturing a cushion having embedded air tubes according to the present invention in the size of a bed mattress.

Hereinafter, preferred embodiments of the present invention are described in detail with reference to the accompanying drawings.

The present invention addresses prevention of deformation by integrating an air tube and a cushion material, automatic charging, achievement of high-elasticity cushion force, a function of uniformly distributing load, and usability as a cushion especially for bedclothes including a bed and a pillow, and various sheets, by providing a cushion in which air tubes expanding to have a rectangular cross-section and arranged with regular intervals are covered by a cushion material and the cushion material is integrally bonded to the outer surfaces of the air tubes.

It should be noted that as a cushion according to the present invention and a method of manufacturing the cushion, one having a size of a pillow in bedclothes is described and the same structure and manufacturing method are applied to other bedclothes such as a bed mattress and cushions for sheets.

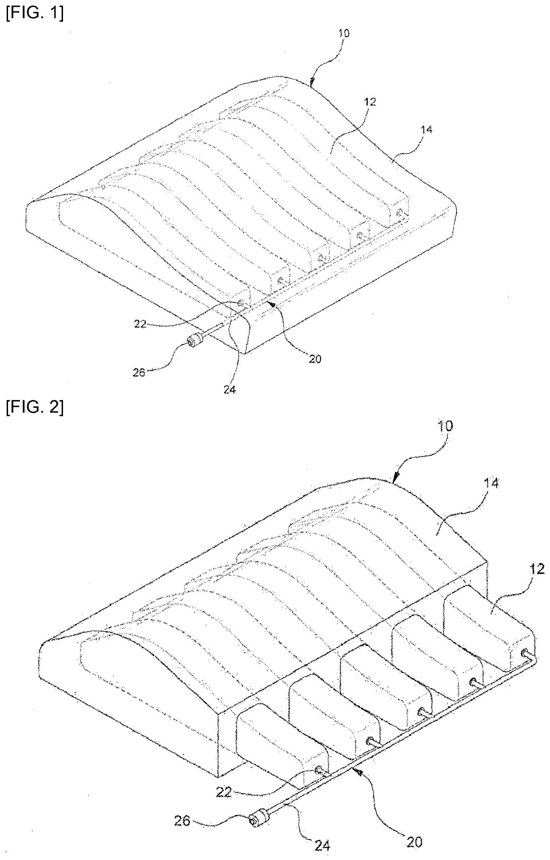

As shown in FIGS. 1 to 3, a cushion 10 of the present invention includes a plurality of air tubes 12 having a rectangular cross-section and arranged with regular intervals and a high-elasticity cushion material 14 covering the air tubes 12, integrally bonded to the outer surfaces of the air tubes 12, and formed by foaming.

Preferably, the air tubes 12 are manufacture to have a size that is inserted in a desired cushion product such as a bed, a pillow, and a sheet, in a shape similar to the external shape of the desired cushion product, and are fixed in a mold to have a rectangular cross-section with the corners rounded.

The cushion material 14 may be a common sponge having a plurality of nonuniform pores, and preferably, or may be made of composite polymeric resin providing cushion ability using a plurality of pores.

The cushion 10 includes an air injecting/discharging unit 20 for injecting air into the air tubes 12 or discharging air from the air tubes 12.

In detail, the air injecting/discharging unit 20 is composed of a plurality of diverging air supply hoses 22 that communicates with the air tubes 12, respectively, and a single main air supply hose 24 that communicates with the ends of the diverging air supply hoses 22, and particularly, a cap 26 that is manually opened/closed to inject/discharge air is coupled to the end of the single main air supply hose 24.

When the cushion material 14 that covers the air tubes 12 and is integrally bonded to the outer surfaces of the air tubes 12 is manufactured by foaming, the diverging air supply hoses 22 and the main air supply hoses 24 are integrally disposed in the cushion material 14 and the cap 26 coupled to the end of the main air supply hose 24 is exposed outside the cushion material 14 so that it can be opened/closed.

Use of the cushion having an embedded air tube in the above configuration is described hereafter.

First, since the air tubes 12 are integrally formed and covered with the cushion material 14 having high elasticity, the air tubes 12 are expanded and pulled by the restoring force of the cushion material 14, so air is sucked into the air tubes 12 up to the atmospheric pressure through the cap 26 that is open even without an air pump.

Next, when air is further supplied in accordance with the user's taste, the user opens the cap 26 and connects a manual air pump (not shown) to the main air supply hose 24, and then when air is supplied to the main air supply hose 24 by the air pump, the air flows into the air tubes 12 through the diverging air supply hoses 22, so the air tubes 12 expend.

Until the air pressure in the air tubes 12 reaches a level that the user wants, operation can be stopped using a small air pump and then the cap 26 is closed, or when the air tubes 12 are expanded and pulled by the restoring force of the cushion material 14 and external air is sucked into the air tubes 12, the cap 26 is closed, so the cushion becomes available in this way.

Accordingly, when a user places a part such as the head on the cushion 10, the cushion material 14 is contracted by the load of the user and the air tubes 12 expanding in the cushion material 14 distribute and support the load, so the user feels comfortable.

On the other hand, in order to reduce the air pressure in the air tubes 12 to use the cushion 10, the cap 26 is opened such that the cushion material 14 is compressed, and accordingly, the air is discharged from the air tubes 12 in the cushion material 14.

That is, the air in the air tubes 12 is discharged to the outside through the cap 26 that is open after sequentially flowing through the diverging air supply hoses 22 and the main air supply hose 24, and when a predetermined amount of the air is discharged, the air pressure in the air tubes 12 is reduced to the level that the user wants by closing back the cap 26.

When the compressive force applied to the cushion material 14 is removed, the cushion material 14 expands and the air tubes 12 are pulled into the initial shapes by the restoring force (elastic force) of the cushion material 14, that is, because air flows back into the pores of the sponge that is the cushion material 14, so the compressed air tubes 12 are filled with external air and the cushion 10 composed of the air tubes 12 and the cushion material 13 is easily restored into the initial shape.

Further, in order to keep the cushion 10 of the present invention at a specific place (a narrow closet or a bag), the user opens the cap 26 and continuously presses the cushion material 14 until the air is completely discharged from the air tubes 12 in the cushion material 14.

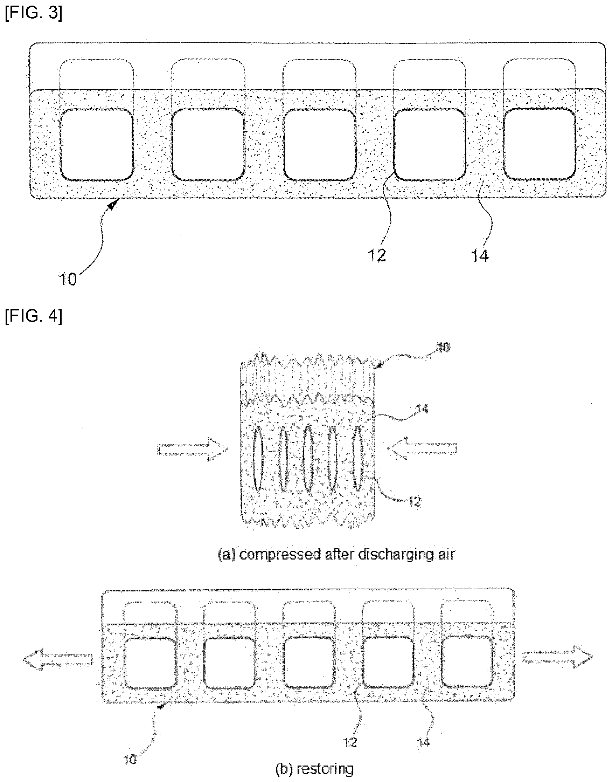

Accordingly, as shown in FIG. 4, when the cushion material 14 keeps being pressed after the air in the air tubes 12 is completely discharged, the air tubes 12 are also pressed, so the entire volume of the cushion 10 decreases, and thus, the cushion 10 with the volume decreased can be conveniently kept by putting it into a narrow closet or a bag.

Obviously, when the cushion 10 is taken out of a narrow space and left, air flows into the pores of the sponge that is the cushion material 14, so the cushion 10 having the air tubes 12 filled with air up to the atmospheric pressure is restored into the initial shape.

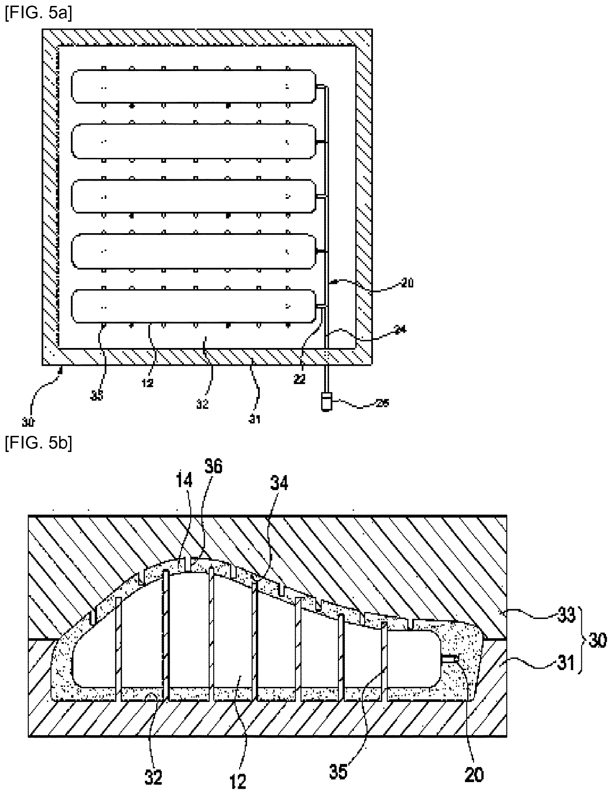

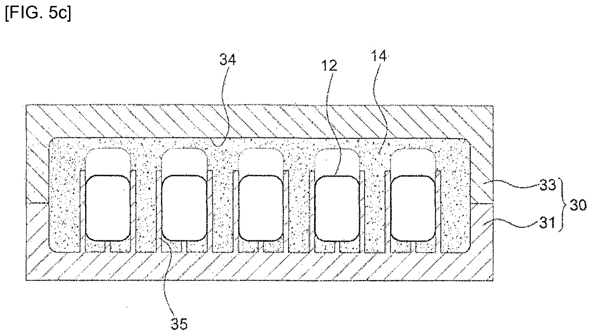

As an embodiment of manufacturing a cushion having an embedded air tube of the present invention having the configuration described above, an example of manufacturing cushion for a pillow is described with reference to FIG. 5a to 5c.

First, a plurality of air tubes 12 are expanded and arranged with regular intervals by injecting air into a lower cavity 32 of a lower mold 31 of a mold 30 for manufacturing a cushion.

Obviously, the mold 30 is shown in a large size to fit to a pillow in FIGS. 5a to 5c, but it may be formed to fit a bed or a sheet.

A plurality of pins 35 is vertically arranged and integrally formed in the lower cavity 32 of the lower mold 32 to support the sides of the air tubes 12 filled with air and the pins 35 are high enough to support the sides of the air tubes 12.

Accordingly, the air tubes 12 are arranged and fixed like being fitted between the pins 35, so they can be keep the positions when the cushion material 14 is foamed.

Next, an upper mold 33 having an upper cavity 34 is combined with the lower mold 31. Pins 36 that prevent coming-off of the air tubes 12 are formed with regular intervals in the upper cavity 34 of the upper mold 33.

Next, by performing foaming that injecting and foaming the cushion material 14, that is, a sponge into the upper and lower cavities 34 and 34 through a material inlet (not shown) of the mold 30, the cushion material 14 covers the air tubes 12 and is bonded and foamed integrally on the outer surfaces of the air tubes 12.

The diverging air supply hoses 22 communicating with the air tubes 12 and the single main air supply hose 24 communicating with the ends of the diverging air supply hoses 22 are also disposed in the lower mold 31, so they are embedded in the cushion material 14 in the foaming.

Further, the end of the main air supply hose 24 is exposed outside the mold, so the end of the main air supply hose 24 protrudes out of the cushion material 14, and the cap 26 is coupled to the exposed end of the main air supply hose 24, thereby manufacturing the cushion for a pillow of the present invention.

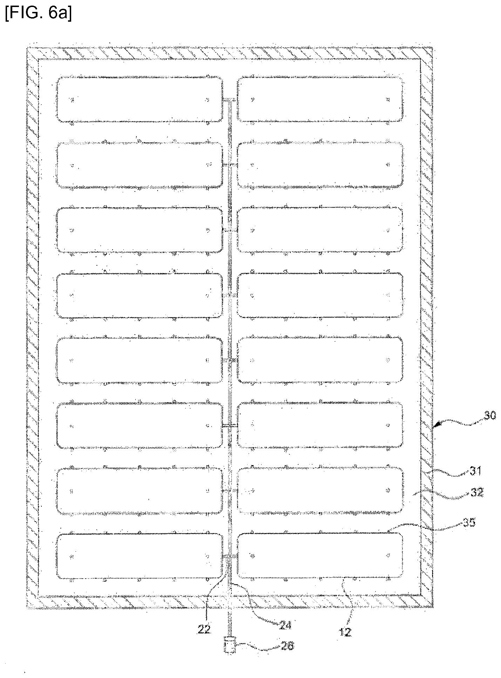

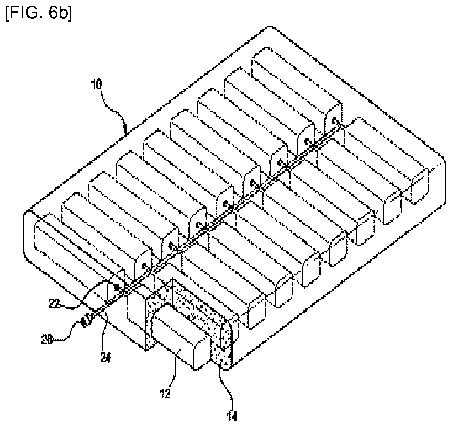

The cushion of the present invention may be manufactured as a cushion for a bed mattress shown in FIG. 6b through the same manufacturing process after manufacturing a large mold, as shown in FIG. 6a, and it may be manufactured in other sizes for sheets.

## Claims

1. A cushion having embedded automatically-inflating air tubes, comprising:
a plurality of automatically-inflating air-tubes (12) arranged with regular intervals and having a rectangular cross-section filled with air;
a high-elasticity cushion material (14) formed by foaming, covering the air tubes (12), and integrally bonded to the outer surface of the air tubes (12); and
an air injecting/discharging unit (20) for injecting/discharging air into/out of the air tubes (12).

2. The cushion of claim 1, wherein the air injecting/discharging unit includes:
diverging air supply hoses (22) that communicates with the air tubes (12), respectively;
a single main air supply hose (24) that communicates with the ends of the diverging air supply hoses (22); and
a cap (26) that is coupled to the end of the single main air supply hose (24).

3. The cushion of claim 2, wherein the diverging air supply hoses (22) and the main air supply hose (24) are integrally embedded in the cushion material (14) when the cushion material (14) is foamed, and the cap (26) coupled to the end of the main air supply hose (24) is exposed outside the cushion material (14).

4. A method of manufacturing a cushion having embedded automatically-inflating air tubes, the method comprising:
arranging a plurality of automatically-charging air tubes (12) having a rectangular cross-section into a lower cavity (32) formed in lower mold (31) of a mold (30) for manufacturing a cushion;
coupling an upper mold (33) having an upper cavity (34) to the lower mold (31); and
foaming the cushion material (14) such that the cushion material (14) is integrally bonded on the outer surfaces of the air tubes (12) and cover the air tubes (12) by injecting the cushion material (14) into a material inlet of the mold.

5. The method of claim 4, wherein in foaming, diverging air supply hoses (22) communicating with the air tubes (12) and a single main air supply hose (24) communicating with the ends of the diverging air supply hoses (22) are integrally embedded in the cushion material (14) except for the ends.

6. The method of claim 4 or 5, wherein pins preventing coming-off of the air tubes are formed with regular intervals in the upper cavity (34) of the upper mold (33), and a plurality of pins (35) is vertically arranged and integrally formed in the lower cavity (32) of the lower mold (31) to support the sides of the air tubes (12) filled with air and maintain the cross-sections of the air tubes (12) in a rectangular shape.

## Patentansprüche

1. Kissen mit eingebetteten, automatisch aufblasbaren Luftschläuchen, das aufweist:
eine Vielzahl von automatisch aufblasbaren Luftschläuchen (12), die in gleichmäßigen Abständen angeordnet sind und einen luftgefüllten rechtwinkligen Querschnitt haben;
ein durch Schäumen geformtes, hochelastisches Kissenmaterial (14), das die Luftschläuche (12) bedeckt und vollständig mit der Außenfläche der Luftschläuche (12) verbunden ist;
und
eine Lufteinblas-/ablasseinheit (20) zum Einblasen/Ablassen von Luft in die/aus den Luftschläuchen (12).

2. Kissen nach Anspruch 1, wobei die Lufteinblas-/ablasseinheit umfasst:
abzweigende Luftversorgungsschlauchstücke (22), die je mit den Luftschläuchen (12) in Verbindung stehen;
ein einziges Hauptluftversorgungsschlauchstück (24), das mit den Enden der abzweigenden Luftversorgungsschlauchstücken (22) in Verbindung steht; und
eine Kappe (26), die mit dem Ende des einzigen Hauptluftversorgungsschlauchstücks (24) gekoppelt ist.

3. Kissen nach Anspruch 2, wobei die abzweigenden Luftversorgungsschlauchstücke (22) und das Hauptluftversorgungsschlauchstück (24) vollständig in das Kissenmaterial (14) eingebettet werden, wenn das Kissenmaterial (14) geschäumt wird, und die mit dem Ende des Hauptluftversorgungsschlauchstücks (24) gekoppelte Kappe (26) außerhalb des Kissenmaterials (14) freiliegt.

4. Verfahren zur Herstellung eines Kissens mit eingebetteten, automatisch aufblasbaren Luftschläuchen, wobei das Verfahren aufweist:
Anordnen einer Vielzahl von automatisch aufblasbaren Luftschläuchen (12) mit einem rechtwinkligen Querschnitt in einem unteren Hohlraum (32), der in einer unteren Form (31) einer Form (30) zur Herstellung eines Kissens geformt ist;
Koppeln einer oberen Form (33) mit einem oberen Hohlraum (34) mit der unteren Form (31); und
Schäumen des Kissenmaterials (14) derart, dass das Kissenmaterial (14) vollständig mit den Außenflächen der Luftschläuche (12) verbunden ist, und Bedecken der Luftschläuche (12) durch Einblasen des Kissenmaterials (14) in einen Materialeinlass der Form.

5. Verfahren nach Anspruch 4, wobei beim Schäumen abzweigende Luftversorgungsschlauchstücke (22), die mit den Luftschläuchen (12) in Verbindung stehen, und ein einziges Hauptluftversorgungsschlauchstück (24), das mit den Enden der abzweigenden Luftversorgungsschlauchstücke (22) in Verbindung steht, vollständig in das Kissenmaterial (14) eingebettet werden, mit Ausnahme der Enden.

6. Verfahren nach Anspruch 4 oder 5, wobei Stifte, die das Lösen der Luftschläuche verhindern, in gleichmäßigen Abständen im oberen Hohlraum (34) der oberen Form (33) geformt werden, und eine Vielzahl von Stiften (35) senkrecht angeordnet und vollständig im unteren Hohlraum (32) der unteren Form (31) geformt ist, um die Seiten der mit Luft gefüllten Luftschläuche (12) zu halten und die Querschnitte der Luftschläuche (12) in einer rechtwinkligen Form zu halten.

## Revendications

1. Coussin pourvu de tubes noyés à gonflage automatique par air, comprenant :
une pluralité de tubes à gonflage automatique par air (12) agencés à intervalles réguliers et ayant une section transversale rectangulaire remplie d'air ;
un matériau de coussin hautement élastique (14) formé par moussage, couvrant les tubes à air (12) et intégralement lié à la surface extérieure des tubes à air (12) ;
et
une unité d'injection/éjection d'air (20) pour injecter/éjecter l'air jusque dans/hors des tubes à air (12).

2. Coussin selon la revendication 1, dans lequel l'unité d'injection/éjection d'air inclut :
des tuyaux d'alimentation d'air divergents (22) qui communiquent avec les tubes à air (12), respectivement ;
un tuyau d'alimentation d'air principal simple (24) qui communique avec les extrémités des tuyaux d'alimentation d'air divergents (22) ; et
un capuchon (26) qui est couplé à l'extrémité du tuyau d'alimentation d'air principal simple (24).

3. Coussin selon la revendication 2, dans lequel les tuyaux d'alimentation d'air divergents (22) et le tuyau d'alimentation d'air principal (24) sont noyés de manière intégrale dans le matériau de coussin (14) quand le matériau de coussin (14) est amené à mousser, et le capuchon (26) couplé à l'extrémité du tuyau d'alimentation d'air principal (24) est exposé à l'extérieur du matériau de coussin (14).

4. Procédé de fabrication d'un coussin ayant des tubes noyés à gonflage automatique par air, le procédé comprenant les étapes consistant à :
agencer une pluralité de tubes à air à chargement automatique (12) ayant une section transversale rectangulaire dans une cavité inférieure (32) réalisée dans le moule inférieur (31) d'un moule (30) destiné à fabriquer un coussin ;
coupler un moule supérieur (33) ayant une cavité supérieure (34) au moule inférieur (31) ; et
faire mousser le matériau de coussin (14) de sorte que le matériau de coussin (14) est intégralement lié sur les surfaces extérieures des tubes à air (12) et couvre les tubes à air (12) par injection du matériau de coussin (14) dans une entrée de matériau du moule.

5. Procédé selon la revendication 4, dans lequel lors du moussage, les tuyaux d'alimentation d'air divergents (22) communiquant avec les tubes à air (12) et un tuyau d'alimentation d'air principal simple (24) communiquant avec les extrémités des tubes d'alimentation d'air divergents (22) sont noyés de manière intégrale dans le matériau de coussin (14) à l'exception des extrémités.

6. Procédé selon la revendication 4 ou 5, dans lequel des broches destinées à empêcher que les tubes à air ne se détachent sont formées à intervalles réguliers dans la cavité supérieure (34) du moule supérieur (33), et une pluralité de broches (35) sont verticalement agencées et intégralement formées dans la cavité inférieure (32) du moule inférieur (31) afin de supporter les côtés des tubes à air (12) remplis d'air et de maintenir les sections transversales des tubes à air (12) dans une forme rectangulaire.
